# EUROPEAN PATENT SPECIFICATION

(11) **EP 3 693 421 B1**
(45) Date of publication and mention of the grant of the patent: **20.12.2023**
(21) Application number: 18863866.2
(22) Date of filing: 27.09.2018
(51) Int. Cl.: C09D 133/00, C09D 5/16, C09D 7/63, C08F 230/08, C09D 143/04, C08K 5/10

(54) **ANTIFOULING PAINT COMPOSITION AND COATED ARTICLE HAVING ANTIFOULING COATING FORMED USING SAID COMPOSITION ON SURFACE**
BEWUCHSHEMMENDE LACKZUSAMMENSETZUNG UND BESCHICHTETER ARTIKEL MIT EINER UNTER VERWENDUNG DER BESAGTEN ZUSAMMENSETZUNG GEBILDETEN BEWUCHSHEMMENDEN BESCHICHTUNG AUF DER OBERFLÄCHE
COMPOSITION DE REVÊTEMENT ANTISALISSURE, ET OBJET REVÊTU AYANT À SA SURFACE UN FILM DE REVÊTEMENT ANTISALISSURE FORMÉ AU MOYEN DE CETTE COMPOSITION

(30) Priority: 04.10.2017 JP 2017194705
(43) Date of publication of application: 12.08.2020
(73) Proprietor: Nitto Kasei Co., Ltd., Osaka-shi Osaka 533-0031 (JP)
(72) Inventor: WAKU, Hidenori, Osaka-shi Osaka 533-0031 (JP); OKA, Nagato, Osaka-shi Osaka 533-0031 (JP)
(74) Representative: Gulde & Partner
(86) International application number: PCT/JP2018/035888
(87) International publication number: WO 2019/069778

(56) References cited:
- EP-A1- 2 990 450
- EP-A2- 0 802 243
- WO-A1-2014/175140
- JP-A- 2001 226 440
- JP-A- 2007 169 628

## Description

### TECHNICAL FIELD

The present invention relates to an antifouling coating composition, and to a coated object having on its surface an antifouling coating film formed using the composition.

### BACKGROUND

Aquatic fouling organisms such as barnacles, tubeworms, common mussels, *Bugula neritina,* sea squirts, green laver, sea lettuce, and slimes adhere to ships (especially ship bottoms), fishing tools such as fishing nets and fishing net accessories, and structures submerged in seawater such as power plant aqueducts, leading to dysfunction, impaired appearance, and other problems of the ships and the like.

In order to prevent such problems, a technique which forms an antifouling coating film by coating an antifouling coating composition on a ship and the like, and allows controlled release of an antifouling agent to realize an antifouling performance for a long period of time has been known (JP 2000-17203 A).

EP 0 802 243 A2 and EP 2 990 450 A1 disclose antifouling compositions.

### SUMMARY OF INVENTION

### TECHNICAL PROBLEM

However, even when the technique of JP 2000-17203 A is used, there are cases where the initial film dissolution becomes too large, and film defects such as cracks occur after a relatively short period of time. Accordingly, further improvement is required.

The present invention has been made by taking the afore-mentioned circumstances into consideration. The present invention provides an antifouling coating composition which can maintain stable film dissolution speed for a long period of time in seawater, and can maintain stable antifouling performance without occurrence of film defects such as cracks in the coating film.

### SOLUTION TO PROBLEM

According to the present invention, an antifouling coating composition, comprising: a copolymer (A); an ester compound (B); and a cuprous oxide (C); wherein: the copolymer is (A) a triorganosilyl ester including copolymer obtained from a mixture of triorganosilyl group including monomer (a), oxygen atom containing monomer (b), and ethylenically unsaturated monomer (c); the monomer (a) is represented by chemical formula (1); the monomer (b) is represented by chemical formula (2); the monomer (c) is a monomer other than the monomer (a) and the monomer (b), and can copolymerize with the monomer (a) and the monomer (b) ; the ester compound (B) comprises at least one ester compound represented by chemical formula (3) to (9); is provided.

The present inventors have conducted intensive studies, and have found that when the antifouling coating composition is allowed to include a particular ester compound (B) in addition to a copolymer (A) having a particular structure and cuprous oxide (C), elution speed of the cuprous oxide at the surface of the coating film can be adjusted, thereby achieving balance with the dissolution speed of the resin. Accordingly, superior antifouling property can be maintained for a long period of time, thereby completing the present invention.

### EFFECT OF THE INVENTION

According to the present invention, an antifouling coating composition which can form an antifouling coating film capable of maintaining high antifouling performance for a long period of time stably, is provided.

### BRIEF DESCRIPTION OF THE DRAWINGS

[FIG. 1] FIG. 1 is a SEM-EDS image of Example 1 (SEM image and element mapping of Cu, Fe, Ti by EDS).
[FIG. 2] FIG. 2 is a SEM-EDS image of Comparative Example 1 (SEM image and element mapping of Cu, Fe, Ti by EDS).

### MODE FOR CARRYING OUT THE INVENTION

Hereinafter, the present invention will be described in detail.

### 1. antifouling coating composition

The antifouling coating composition of the present invention comprises a copolymer (A), ester compound (B), and cuprous oxide (C) .

### 1-1. copolymer (A)

Copolymer (A) is a triorganosilyl ester including copolymer obtained from a mixture of a triorganosilyl group including monomer (a), oxygen atom containing monomer (b), and ethylenically unsaturated monomer (c). Hereinafter, synthetic methods and the like of the monomer (a), monomer (b), monomer (c), and copolymer (A) will be explained specifically.

### <triorganosilyl group including monomer (a)>

The monomer (a) has a structure represented by chemical formula (1) . 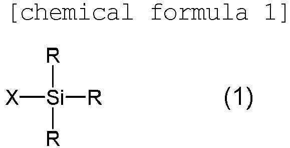 (Wherein, three R are the same or different from each other, and represent a C3-C8 hydrocarbon group branched at its α-position or at its β-position; and the hydrocarbon group is an aliphatic or an aromatic, and has a linear, branched, or ring structure; X represents an acryloyloxy group, methacryloyloxy group, maleinoyloxy group, fumaroyloxy group or itaconoyloxy group.)

As the C3-C8 hydrocarbon group branched at its α-position, for example, isopropyl group, s-butyl group, t-butyl group, 1-ethylpropyl group, 1-methylbutyl group, 1-methylpentyl group, 1,1-dimethylpropyl group, 1,1-dimethylbutyl group, texyl group, cyclohexyl group, 1,1-dimethylpentyl group, 1-methylhexyl group, 1,1-dimethylhexyl group, 1-methylheptyl group and the like can be mentioned. As the hydrocarbon group branched at its β-position, for example, 2,2-dimethylpropyl group, cyclohexylmethyl group, 2-ethylhexyl group, 2-propylpentyl group and the like can be mentioned.

By selecting a particular group as R, occurrence of film defects can be further suppressed, and the water resistance of the antifouling coating film is especially improved. From such viewpoints, R are the same or different from each other and are each preferably isopropyl group, s-butyl group, t-butyl group, phenyl group, and 2-ethylhexyl group; and more preferably isopropyl group.

As the monomer (a), for example, triisopropylsilyl (meth)acrylate, tri-s-butylsilyl (meth)acrylate, triphenylsilyl (meth)acrylate, diisopropyl s-butylsilyl (meth)acrylate, diisopropyl t-butylsilyl (meth)acrylate, diisopropyltexylsilyl (meth)acrylate, diisopropylphenylsilyl (meth)acrylate, isopropyl di-s-butylsilyl (meth)acrylate, isopropyldiphenylsilyl (meth)acrylate, diphenyltexylsilyl (meth)acrylate, t-butyldiphenylsilyl (meth)acrylate, diisopropylcyclohexylsilane (meth)acrylate, tricyclohexylsilane (meth)acrylate, tri-1,1-dimethylpentylsilane (meth)acrylate, tri-1-methylhexylsilane (meth)acrylate, tri-1,1-dimethylhexylsilane (meth)acrylate, tri-1-methylheptylsilane (meth)acrylate, tri-2,2-dimethylpropylsilane (meth)acrylate, tricyclohexylmethylsilane (meth)acrylate, diisopropylcyclohexylmethylsilane (meth)acrylate, tri-2-ethylhexylsilane (meth)acrylate, tri-2-propylpentylsilane (meth) acrylate and the like can be mentioned. In view of the ability to form an antifouling coating film which hardly occur film defect and is superior in water resistance, triisopropylsilyl (meth)acrylate, tri-s-butylsilyl (meth)acrylate, t-butyldiphenylsilyl (meth)acrylate, and tri-2-ethylhexylsilyl (meth)acrylate are preferable, and triisopropylsilyl (meth)acrylate is further preferable. These triorganosilyl ester (meth) acrylate monomers can be used alone or two or more of these can be used in combination.

### <oxygen atom containing monomer (b)>

The monomer (b) has a structure represented by chemical formula (2) .

Y-R . . . (2)

(Wherein, R represents C2-C10 alkyl group or aryl group having an oxygen atom; and Y represents an acryloyloxy group, methacryloyloxy group, maleinoyloxy group, fumaroyloxy group or itaconoyloxy group.)

The monomer (b) is an ethylenically unsaturated monomer including an oxygen atom, which can copolymerize with the monomer (a). For example, 2-methoxyethyl (meth)acrylate, 2-methoxypropyl (meth)acrylate, 4-methoxybutyl (meth)acrylate, 2-ethoxyethyl (meth)acrylate, 2- (2-ethoxyethoxy) ethyl (meth) acrylate, diethylene glycol mono methyl (meth)acrylate, propylene glycol mono methyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth) acrylate, and the like can be mentioned. From the viewpoint of film property, 2-methoxyethyl (meth)acrylate, 2-ethoxyethyl (meth)acrylate, and 2-(2-ethoxyethoxy)ethyl (meth)acrylate are more preferable. The monomer (b) can be used alone or two or more of these can be used in combination, as a monomer component of the copolymer (A) .

### <ethylenically unsaturated monomer (c)>

The monomer (c) is an ethylenically unsaturated monomer other than the monomer (a) and the monomer (b), and can copolymerize with the monomer (a) and the monomer (b). The monomer (c) is, for example, (meth)acrylic acid ester such as methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, dimethylaminoethyl (meth)acrylate, diethylaminoethyl (meth)acrylate, benzyl (meth)acrylate, and phenyl (meth)acrylate, zinc (meth) acrylate, copper (meth) acrylate, zinc versatate (meth) acrylate, copper versatate (meth)acrylate, zinc naphthenate (meth)acrylate, copper naphthenate (meth)acrylate, zinc stearate (meth)acrylate, copper abietate meth(acrylate) and the like; vinyl compounds such as vinyl chloride, vinylidene chloride, (meth)acrylonitrile, vinyl acetate, butyl vinyl ether, lauryl vinyl ether, N-vinyl pyrrolidone and the like; and aromatic compounds such as styrene, vinyl toluene, α-methyl styrene and the like can be mentioned. Among these, (meth)acrylic acid ester is especially preferable; and methyl (meth)acrylate, ethyl (meth)acrylate, n-butyl (meth)acrylate, i-butyl (meth)acrylate, 2-ethylhexyl (meth)acrylate, zinc (meth)acrylate, zinc naphthenate (meth)acrylate, copper abietate meth(acrylate), hydrogenated rosin zinc (meth) acrylate, and hydrogenated rosin copper (meth) acrylate are further preferable. Monomer (c) exemplified above can be used alone or two or more of these can be used in combination as the monomer component of the copolymer (A).

### <synthesis of copolymer (A)>

Copolymer (A) can be obtained by polymerizing a mixture of the monomer (a), monomer (b), and monomer (c) . The monomer (a) is contained in the mixture preferably by approximately 20 to 70 mass%, more preferably approximately 30 to 60 wt%. When the content of the monomer (a) is approximately 30 to 60 wt%, the film formed by using the antifouling coating composition obtained would have a stable film dissolution property, and can maintain the antifouling performance for a long period of time.

The weight average molecular weight (Mw) of copolymer (A) is preferably 10,000 to 100,000, and especially preferably 20,000 to 70,000. When Mw is 10,000 to 100,000, the coating film would not become brittle, and the dissolution of the coating film would be reasonable, thereby exhibiting the desired antifouling effect sufficiently. As the method for measuring Mw, gel permeation chromatography (GPC) can be mentioned for example.

The copolymer (A) can be a random copolymer, an alternating copolymer, a periodic copolymer, or a block copolymer of the monomer (a), monomer (b), and monomer (c) . The copolymer (A) can be, for example, obtained by polymerizing monomer (a), monomer (b), and monomer (c) in the presence of a polymerization initiator.

As the polymerization initiator used in the polymerization reaction for example, azo compounds such as 2,2' -azobisisobutyronitrile (AIBN), 2,2'-azobis(2-methylbutyronitrile), and dimethyl-2,2'-azobisisobutylate; and peroxides such as benzoyl peroxide, di-tert-butylperoxide, tert-butyl peroxybenzoate, tert-butyl peroxyisopropyl carbonate, tert-butyl peroxy 2-ethylhexanoate, 1,1,3,3-tetramethylbutylperoxy-2-ethylhexanoate, and 1,1,3,3-tetramethylbutylperoxy neodecanoate can be mentioned. These polymerization initiators can be used alone, or two or more of these can be used in combination. As the polymerization initiator, AIBN, tert-butyl peroxy 2-ethylhexanoate, 1,1,3,3-tetramethylbutylperoxy-2-ethylhexanoate, or 1,1,3, 3-tetramethylbutylperoxy neodecanoate are especially preferable. By suitably controlling the amount of the polymerization initiator being used, the molecular weight of the resin copolymer (A) can be adjusted. Here, chain transfer agent such as mercaptan and α-methyl styrene dimer can be used.

As the method of polymerization, solution polymerization, bulk polymerization, emulsion polymerization, suspension polymerization and the like can be mentioned. Among these, in view of the capability of obtaining the copolymer (A) simply with accuracy, solution polymerization is preferable.

In the polymerization reaction, organic solvent can be used if necessary. As the organic solvent, for example, aromatic hydrocarbon solvents such as xylene and toluene; aliphatic hydrocarbon solvents such as hexane and heptane; ester solvents such as ethyl acetate, butyl acetate, isobutyl acetate, and methoxypropyl acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone, and methyl isobutyl ketone; can be mentioned. Among these, ester solvents, alcohol solvents, and aromatic hydrocarbon solvents are preferable, and butyl acetate, isobutyl acetate, butyl alcohol, propylene glycol monomethyl ether, toluene, and xylene are further preferable. These solvents can be used alone, or two or more of these can be used in combination.

The reaction temperature in the polymerization reaction shall be suitably controlled depending on the type of the polymerization initiator used and the like. The reaction temperature is usually 70 to 140°C, preferably 80 to 120°C. The reaction time in the polymerization reaction shall be suitably controlled depending on the reaction temperature and the like, and is usually approximately 4 to 8 hours. The polymerization reaction is preferably performed under inert gas atmosphere such as nitrogen gas and argon gas.

The content of the copolymer (A) in the composition of the present invention is not particularly limited, and is usually 2 to 50 mass%, preferably 4 to 25 mass% in the solids of the composition of the present invention. When the content of the copolymer (A) is in the range of 4 mass% to 25 mass%, suitable film dissolution speed and film property can be obtained in seawater, stable surface renewal property can be maintained for a long period of time, and thus desired antifouling effect can be realized sufficiently. In addition, superior recoating property of the coating film can be realized.

### 1-2. ester compound (B)

The ester compound (B) of the present invention comprises at least one of ester compounds (3) to (9) represented by chemical formulas (3) to (7) and (9).

Ester compound (3) has a structure represented by chemical formula (3). Ester compound (3) is, for example, an aliphatic chain ester or an aromatic ester. For example, it is an ester compound obtained via formation of ester bonds between a monocarboxylic acid and a mono alcohol. When the ester compound (3) is an aliphatic chain ester, R¹ is an aliphatic hydrocarbon group which can include a hetero atom. On the other hand, when the ester compound (3) is an aromatic ester, R¹ has an aromatic ring. The aromatic ring is preferably bound directly to a carbon atom of a carbonyl group. 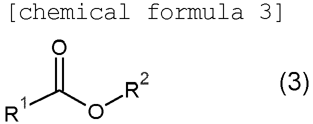 (Wherein, each of R¹ and R² can include a hetero atom, and the hydrocarbon group is an aliphatic or an aromatic, and has a linear, branched, or cyclic structure.)

The number of carbon atoms in the hydrocarbon groups of R¹ are 2 to 18, and the number of carbon atoms in the hydrocarbon groups of R² are 1 to 18.

As a specific example of the ester compound (3), regarding an aliphatic ester, decyl decanoate, geranyl acetate, isopropyl myristate, isopropyl palmitate, benzyl isovalerate, benzyl acetoacetate, p-tolyl n-octanoate, benzyl 7,8-epoxystearate, octyl 9,10-epoxystearate, cetyl stearate and the like can be mentioned.

As a specific example of the ester compound (3), regarding an aromatic ester, isoamyl phenylacetate, 2-ethylhexyl benzoate, hexyl 4-hydroxybenzoate and the like can be mentioned.

### <ester compound (4)>

Ester compound (4) has a structure represented by chemical formula (4). Ester compound (4) is, for example, an aliphatic chain ester. For example, it is an ester compound obtained via formation of ester bonds between a dicarboxylic acid and two mono alcohols. 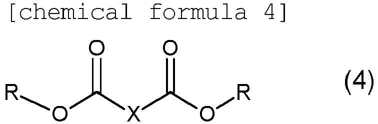 (Wherein, each of X and R is a C1-C22 hydrocarbon group which can include a hetero atom, and the hydrocarbon group is an aliphatic or an aromatic, and has a linear, branched, or cyclic structure. The two R are the same or different from each other.)

The number of carbon atoms in the hydrocarbon groups of X and R are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of X and R, oxygen atom, sulfur atom, nitrogen atom and the like can be mentioned. X is further preferably a C2-C16 alkylene group.

As a specific example of the ester compound (4), di-2-ethylhexyl succinate, di-2-butoxyethyl adipate, di-2-ethylhexyl adipate, diisononyl adipate, di-2-ethylhexyl azelate, di-2-ethylhexyl sebacate and the like can be mentioned.

### <ester compound (5)>

Ester compound (5) has a structure represented by chemical formula (5) . Ester compound (5) is, for example, an ethylene glycol ester. For example, it is an ester compound obtained via formation of ester bonds between two monocarboxylic acids and a di-alcohol. 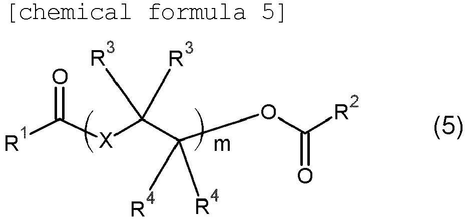 (Wherein, X is an oxygen atom or a C1-C22 hydrocarbon group including an oxygen atom, and the hydrocarbon group is an aliphatic or an aromatic, and has a linear, branched, or cyclic structure. Each of R¹ and R² is a C1-C22 hydrocarbon group which can include a hetero atom, and the hydrocarbon group is an aliphatic or an aromatic, and has a linear, branched, or cyclic structure. Each of R³ and R⁴ is a hydrogen atom or a C1-C22 hydrocarbon group which can include a hetero atom, and the hydrocarbon group is an aliphatic or an aromatic, and has a linear, branched, or cyclic structure. m is an integer of 1 to 20. The two R³ are the same or different from each other. The two R⁴ are the same or different from each other.)

Ester compound (5) preferably includes an ester compound represented by chemical formula (15). That is, in chemical formula (5), X is preferably oxygen atom, and R³ and R⁴ are preferably hydrogen atom.

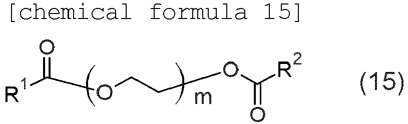

The number of carbon atoms in the hydrocarbon groups of X and R¹ to R⁴ are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of R¹ to R⁴, oxygen atom, sulfur atom, nitrogen atom and the like can be mentioned. m is preferably 1 to 10, and is particularly, for example, 1, 2, 3, 4, 5, 6, 7, 8, 9, 10, 11, 12, 13, 14, 15, 16, 17, 18, 19, or 20, and can be in the range between the two values exemplified herein.

As a specific example of ester compound (5), diethylene glycol dibenzoate, triethylene glycol di (2-ethylhexanoate), propylene glycol dilaurate and the like can be mentioned.

### <ester compound (6)>

Ester compound (6) has a structure represented by chemical formula (6). Ester compound (6) is, for example, an aromatic ester. For example, it is an ester compound obtained via formation of ester bonds between aromatic dicarboxylic acid and two mono-alcohols. 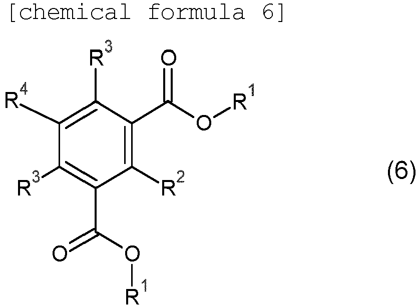 (Wherein, two R¹ are the same or different, and are each a C1-C22 hydrocarbon group which can include a hetero atom, and the hydrocarbon group is an aliphatic or an aromatic, and has a linear, branched, or cyclic structure. Each of R² to R⁴ is a hydrogen atom or a C1-C22 hydrocarbon group which can include a hetero atom, and the hydrocarbon group is an aliphatic or an aromatic, and has a linear, branched, or cyclic structure. The two R³ are the same or different from each other.)

The number of carbon atoms in the hydrocarbon groups of R¹ to R⁴ are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of R¹ to R⁴, oxygen atom, sulfur atom, nitrogen atom and the like can be mentioned. R² to R⁴ are preferably hydrogen atom.

As a specific example of ester compound (6), diethyl isophthalate, cyclohexyl isophthalate, di-2-ethylhexyl isophthalate, di-n-octyl isophthalate, diisononyl isophthalate and the like can be mentioned.

### <ester compound (7)>

Ester compound (7) has a structure represented by chemical formula (7). Ester compound (7) is, for example, an aromatic ester. For example, it is an ester compound obtained via formation of ester bonds between aromatic dicarboxylic acid and two mono-alcohols. 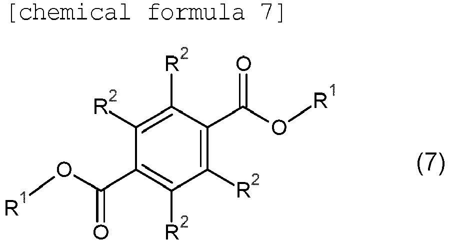 (Wherein, two R¹ are the same or different, and are each a C1-C22 hydrocarbon group which can include a hetero atom, and the hydrocarbon group is an aliphatic or an aromatic, and has a linear, branched, or cyclic structure. Four R² are the same or different from each other, and are each a hydrogen atom or a C1-C22 hydrocarbon group which can include a hetero atom, and the hydrocarbon group is an aliphatic or an aromatic, and has a linear, branched, or cyclic structure.)

The number of carbon atoms in the hydrocarbon groups of R¹ or R² are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of R¹ to R², oxygen atom, sulfur atom, nitrogen atom and the like can be mentioned. R² is preferably hydrogen atom.

As a specific example of ester compound (7), diethyl terephthalate, cyclohexyl terephthalate, di-2-ethylhexyl terephthalate, di-n-octyl terephthalate, diisononyl terephthalate and the like can be mentioned.

### <ester compound (9)>

Ester compound (9) has a structure represented by chemical formula (9). Ester compound (9) is, for example, an aromatic ester. For example, it is an ester compound obtained via formation of ester bonds between aromatic tetracarboxylic acid and four mono-alcohols. 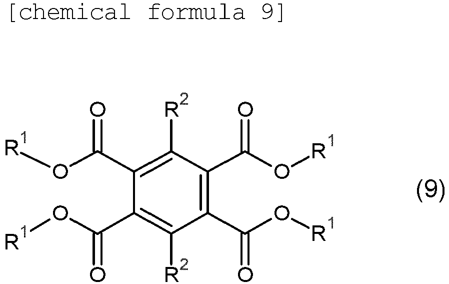 (Wherein, four R¹ are the same or different, and are each a C1-C22 hydrocarbon group which can include a hetero atom, and the hydrocarbon group is an aliphatic or an aromatic, and has a linear, branched, or cyclic structure. Two R² are the same or different from each other, and are each a hydrogen atom or a C1-C22 hydrocarbon group which can include a hetero atom, and the hydrocarbon group is an aliphatic or an aromatic, and has a linear, branched, or cyclic structure.)

The number of carbon atoms in the hydrocarbon groups of R¹ to R² are preferably 2 to 18. The number of carbon atoms is particularly, for example, 1, 2, 3, 4, 5, 6, 7, 8, 9, 10, 11, 12, 13, 14, 15, 16, 17, 18, 19, 20, 21, or 22, and can be in the range between the two values exemplified herein. As the hetero atom of R¹ to R², oxygen atom, sulfur atom, nitrogen atom and the like can be mentioned. R² is preferably hydrogen atom.

As the specific example of ester compound (9), tetramethyl pyromellitate, tetra-2-ethylhexyl pyromellitate, tetra-n-octyl pyromellitate, tetraisononyl pyromellitate and the like can be mentioned.

### <method for obtaining or manufacturing ester compound (B), formulation method thereof, and formulation amount>

There is no particular limitation regarding ester compound (B), and those manufactured by known manufacturing method, commercially available product, and those available as reagent and the like can be used.

As a known manufacturing method for example, dehydration condensation reaction of carboxylic acids and alcohols, transesterification reaction of esters and alcohols, and esterification reaction of carboxylic acid chlorides and alcohols can be mentioned. Here, some of the ester compounds can be manufactured by epoxidizing or hydrogenating the unsaturated portion of a commercially available analogous compound, or by partially converting a commercially available product, for example by substitution reaction and coupling reaction of a commercially available ester compound.

As the commercially available product, for example, pyromellitic acid tetra-2-ethylhexyl ester obtained as "UL-80 (product name)" from ADEKA Corporation, di-2-ethylhexyl terephthalate obtained as "DOTP (product name)" from J-PLUS Co., Ltd., and triethylene glycol bis (2-ethylhexanoate) obtained as "Proviplast 1783" from SANKO CO., LTD. can be mentioned.

There is no particular limitation on how ester compound (B) of the present invention is formulated into the coating composition. The ester compound (B) can be formulated when during the coating dispersion process, or can be formulated during the final process.

The ester compound (B) of the present invention is contained by 0.1 to 15 mass%, preferably 0.4 to 10 mass%, and especially preferably 0.5 to 8 mass% in the solids of the composition of the present invention. When the content of the ester compound (B) is in the afore-mentioned range, the dissolution speed of cuprous oxide can be adjusted to achieve a balance with the dissolution speed of the resin, thereby maintaining antifouling property for a long period of time. Further, no film defect (cracks and the like) would not occur in the antifouling coating film after allowing the film be immersed in seawater for a predetermined period.

### 1-3. cuprous oxide (C)

Content of cuprous oxide (C) in the composition of the present invention is not particularly limited. The content ratio of cuprous oxide (C) and ester compound (B) (converted as solid content) by mass ratio (cuprous oxide (C)/ester compound (B)) is usually 0.5 to 120, preferably 1 to 90, and further preferably 3 to 60. When the content of cuprous oxide (C) is in the afore-mentioned range, antifouling property can be maintained for a long period of time.

When the average particle size of the cuprous oxide (C) is 0.5 to 50 µm (Coulter counter method), the antifouling property can be maintained further prominently.

From the viewpoint of long-term shelf stability, the cuprous oxide (C) is preferably surface-treated with glycerin, sucrose, stearic acid, lauric acid, lecithin, mineral oil and the like. When the cuprous oxide (C) is coated with either one of glycerin, sucrose, and stearic acid, the long-term antifouling property can be maintained further prominently.

### 1-4. other components

The antifouling coating composition of the present invention can be formulated with thermoplastic resin (D), other resin (E), other additives (F), other antifouling agent (G) and the like in addition to the copolymer (A), ester compound (B), and cuprous oxide (C), if necessary. Accordingly, a further superior antifouling effect can be achieved.

### <thermoplastic resin (D)>

As the thermoplastic resin (D) for example, rosin, rosin derivative and metal salts thereof, monocarboxylic acid and salt thereof, or alicyclic hydrocarbon resin and the like can be mentioned.

As the rosin, tall oil rosin, gum rosin, wood rosin and the like can be exemplified. As the rosin derivative, hydrogenated rosin, disproportionated rosin, maleic acid modified rosin, formylated rosin, polymerized rosin and the like can be exemplified. Reactant of metal compound and rosin can be used as the metal salt of rosin and metal salt of rosin derivative. As the metal salt of rosin for example, gum rosin zinc (or copper) salt, wood rosin zinc (or copper) salt, tall oil rosin zinc (or copper) salt and the like can be mentioned. As the metal salt of rosin derivative, hydrogenated rosin zinc (or copper) salt, disproportionated rosin zinc (or copper) salt, maleic acid modified rosin zinc (or copper) salt, formylated rosin zinc (or copper) salt, polymerized rosin zinc (or copper) salt and the like can be mentioned.

As the monocarboxylic acid for example, fatty acid having approximately 5 to 30 carbon atoms, synthetic fatty acid, naphthenic acid and the like can be mentioned. As the salt of monocarboxylic acid, copper salt, zinc salt, magnesium salt, calcium salt and the like can be mentioned.

As the alicyclic hydrocarbon resin, Quintone 1500, Quintone 1525L, and Quintone 1700 (product name, available from Zeon Corporation) and the like can be mentioned as commercially available product for example.

Especially, in terms of providing adequate film hardness and water resistance to the composition of the present invention, the composition of the present invention preferably comprises at least one selected from rosin, rosin derivative, and metal salts thereof as the thermoplastic resin (D). Further, in terms of improving crack resistance and water resistance, the composition preferably comprises copper salt or zinc salt of rosin or rosin derivative.

The content of thermoplastic resin (D) in the composition of the present invention is usually 1 to 80 parts by mass, preferably 10 to 50 parts by mass with respect to 100 parts by mass of the copolymer (A). When the content of thermoplastic resin (D) is less than 1 part by mass, effect for preventing adhesion of aquatic fouling organisms, especially during the anchorage period, cannot be exhibited sufficiently. When the content of thermoplastic resin (D) exceeds 80 parts by mass, defects in the coating film such as cracks and delamination tend to occur, thereby being unable to exhibit sufficient effect for preventing adhesion of aquatic fouling organisms. The content of the thermoplastic resin (D) is for example, 1, 5, 10, 15, 20, 25, 30, 35, 40, 45, 50, 55, 60, 65, 70, 75, or 80 parts by mass with respect to 100 parts by mass of the copolymer (A), and can be in the range between the two values exemplified herein.

### <other resin (E)>

By allowing the antifouling coating composition of the present invention to include other resin (E), cost can be reduced without deteriorating the effect of the present invention. In addition, synergistic effect with the property of the resin (E) can be obtained.

As the other resin (E), for example, (meth)acrylic resin, alkyd resin, polyester resin, chloride rubber resin, vinyl resin, petroleum resin, (modified) terpene phenol resin, cellulose-based resin, vinyl ether resin, epoxy resin, urethane resin, metal-includeing resin, zwitterionic compound-includeing resin, silicone resin and the like can be mentioned.

The other resin (E) in the composition of the present invention can be includeed in a range which does not deteriorate adequate film dissolution speed and film property in seawater. Such content is 1 to 200 parts by mass, preferably 20 to 100 parts by mass with respect to 100 parts by mass of the copolymer (A).

### <other additives (F)>

Further, if necessary, the antifouling coating composition of the present invention can further include pigment, dye, antifoaming agent, anti-sagging agent, dispersant, anti-settling agent, dehydrating agent, plasticizer, organic solvent and the like, in a range which does not deteriorate adequate film dissolution speed and film property in seawater.

### <other antifouling agent (G)>

As the other antifouling agent (G), there is no particular limitation so long as it is a substance having a killing or repellent effect to marine fouling organisms. For example, an inorganic chemical and an organic chemical can be mentioned.

As the inorganic chemical for example, cuprous thiocyanate (generic name: copper rhodanide), cupro-nickel, copper powder, zinc oxide and the like can be mentioned. Among these, copper rhodanide is particularly preferable.

As the organic chemical for example, organic copper compounds such as copper 2-mercaptopyridine-N-oxide (generic name: copper pyrithione) and the like; organic zinc compounds such as zinc 2-mercaptopyridine-N-oxide (generic name: zinc pyrithione), zinc ethylenebis(dithiocarbamate) (generic name: zineb), zinc bis(dimethyldithiocarbamate) (generic name: ziram), bis(dimethyldithiocarbamate) ethylenebis(dithiocarbamate)dizinc (generic name: polycarbamate) and the like; organic boron compounds such as pyridine-triphenylborane, 4-isopropylpyridine-diphenylmethylborane, 4-phenylpyridine-diphenylborane, triphenylboron-n-octadecylamine, triphenyl[3-(2-ethylhexyloxy)propylamine]boron and the like; maleimide compounds such as 2,4,6-trichloromaleimide, N-(2,6-diethylphenyl) 2,3-dichloromaleimide and the like; and other compounds such as 4,5-dichloro-2-n-octyl-3-isothiazolone (generic name: Sea-nine 211), 3,4-dichlorophenyl-N-N-dimethylurea (generic name: Diuron), 2-methylthio-4-t-butylamino-6-cyclopropylamino-s-triazine (generic name: Irgarol 1051), 2,4,5,6-tetrachloroisophthalonitrile (generic name: Chlorothalonil), N-dichlorofluoromethylthio-N',N'-dimethyl-N-p-tolylsulfamide (generic name: Tolylfluanid), N-dichloromethylthio-N' ,N'-dimethyl-N-phenylsulfamide (generic name: Dichlofluanid), 2-(4-thiazolyl)benzimidazole (generic name: Thiabendazole), 3-(benzo[b]thien-2-yl)-5,6-dihydro-1,4,2-oxathiazine-4-oxide (generic name: Bethoxazin), 2-(p-chlorophenyl)-3-cyano-4-bromo-5-trifluoromethyl pyrrole (generic name: ECONEA 028), 4-[1-(2,3-dimethylphenyl)ethyl]-1H-imidazole (generic name: Medetomidine) and the like can be mentioned. Among these, zinc pyrithione, copper pyrithione, pyridine-triphenylborane, 4-isopropylpyridine-diphenylmethylborane, Bethoxazin, Zineb, Sea-nine 211, and Irgarol 1051 are preferable, and copper pyrithione, zinc pyrithione, Sea-nine 211, pyridine-triphenylborane, and Bethoxazin are more preferable. These antifouling agents can be used alone, or two or more of these can be used in combination.

The content of the antifouling agent (G) in the composition of the present invention is not particularly limited. Here, the content in the solids of the composition of the present invention is usually 0.1 to 75 mass%, preferably 1 to 60 mass%. When the content of the antifouling agent (G) exceeds 75 mass%, the coating film formed would become weak, and the adhesion property with the object onto which the coating film is formed would become weak. Therefore, function as the antifouling coating film cannot be fully realized.

### 2. manufacturing method of antifouling coating composition

The antifouling coating composition of the present invention can be manufactured by mixing and dispersing a mixture solution including the copolymer (A), ester compound (B), cuprous oxide (C) and other additives.

The content of the copolymer, antifouling agent and the like in the mixture solution shall be adjusted so that the content of the copolymer, antifouling agent and the like in the antifouling coating composition would be satisfied.

Regarding the mixture solution, the ingredients such as copolymer, antifouling agent and the like are preferably dissolved or dispersed in the solvent. As the solvent, organic solvents similar to those mentioned above can be used.

As the disperser for example, the one which can be used as a micro-pulverizer can be suitably used. For example, a commercially available homo mixer, sand mill, bead mill and the like can be used. Furthermore, the mixed solution can be mixed and dispersed by using a stirrer-equipped container including glass beads for mixing and dispersing.

### 3. method for antifouling treatment, antifouling coating film, and coated object

The method for antifouling treatment of the present invention is characterized in that an antifouling coating film is formed using the above-explained antifouling coating composition on the surface of an object that is subjected to coating. The method for antifouling treatment of the present invention can prevent adhesion of aquatic fouling organisms by the gradual dissolution of the surface of the antifouling coating film such that the surface of the coating film is continually renewed. After the dissolution of the coating film, the antifouling effect can be continuously exhibited by recoating the composition.

Examples of objects on which a coating film can be formed include ships (in particular, ship bottoms), fishing tools, and structures submerged in seawater. Examples of the fishing tools include fishing nets for use in aquaculture or in fixed netting, and fishing net accessories such as ropes and floats attached to fishing nets. Examples of the structures submerged in seawater include power plant aqueducts, bridges, and port facilities.

The antifouling coating film can be formed by applying the antifouling coating composition onto the surface (entirely or partially) of an object on which the coating film is to be formed. Examples of the coating method include brush coating, spray coating, dipping, flow coating, and spin coating. These coating methods can be employed singly or in combination. The coating composition is dried after the application. The drying temperature can be room temperature. The drying time can be suitably selected depending on the thickness of the coating film and the like.

The antifouling coating film produced using the above antifouling coating composition according to an embodiment of the present invention can exhibit suitable dissolving rate and properties of the coating film in seawater. In addition, the stable surface renewal property can remain constant for a long period of time and a desired antifouling effect can be effectively exerted. Also, the coating film can advantageously exert excellent recoating performance.

The thickness of the antifouling coating film can be suitably selected depending on the type of an object on which the coating film is to be formed, the navigation speed of a ship, the seawater temperature and the like. For example, when the object on which a coating film is formed is a ship bottom, the thickness of the antifouling coating film is usually 50 to 700 um, and preferably 100 to 600 um.

The antifouling coating film of the present invention has a suitable hardness. Specifically, the antifouling coating film of the present invention has a hardness sufficient enough to cause no coating film defects such as cold flow.

The coated object of the present invention has the antifouling coating film on its surface. The coated object of the present invention can have the antifouling coating film on the entire surface thereof or on the partial surface thereof.

The coated object of the present invention is provided with a coating film having stable long-term surface renewal property and excellent recoating performance since the suitable dissolving rate and properties of the coating film in seawater are improved. Accordingly, the coated object can be preferably applied for the above ships (in particular, ship bottoms), fishing tools, structures submerged in seawater, etc. For example, when the antifouling coating film is formed on the surface of a ship bottom, the antifouling coating film gradually dissolves from the surface, so that the coating film surface is always renewed. This prevents the adhesion of aquatic fouling organisms.

Further, the hydrolysis speed of the antifouling coating film is controlled adequately. Accordingly, the ship can maintain the antifouling performance for a long period of time. For example, when the ship is in a static state such as during the anchorage period and during the rigging period, adhesion and accumulation of the aquatic fouling organisms hardly occur, thereby exhibiting antifouling effect for a long period of time.

In addition, the surface of the antifouling coating film is basically free from cracks or peeling even after a long period of time. Accordingly, it is unnecessary to completely remove the existing coating film before re-forming a new coating film. Thus, by directly recoating the antifouling coating film composition, the antifouling coating film can be effectively formed. This makes it possible to continuously maintain the antifouling performance in a simple and inexpensive manner.

### EXAMPLE

Examples and the like are provided hereinafter, and further clarifies characteristics of the present invention. The present invention, however, is not limited to these Examples.

Examples and the like are provided hereinafter, and further clarifies characteristics of the present invention. The present invention, however, is not limited to these Examples.

In each of Production Examples, Comparative Production Examples, Examples, and Comparative Examples, "%" denotes "% by mass". The viscosity was measured at 25°C using a Brookfield viscometer. The weight-average molecular weight (Mw) was determined by gel permeation chromatography (GPC) (using a polystyrene standard) . GPC was performed under the following conditions.
Equipment: HLC-8220 GPC (available from Tosoh Corporation)
Column: TSK-gel Super HZM-M (available from Tosoh Corporation), two columns used
Flow rate: 0.35 mL/min
Detector: RI
Column thermostat temperature: 40°C
Developing solvent: THF

The non-volatile content is a value determined in accordance with JIS K 5601-1-2:1999 (ISO 3251:1993) "Testing methods for paint components- Determination of non-volatile matter content". Solids is a value calculated by rounding the value of non-volataile content obtained by the above method to one decimal place.

The formulation among of each component shown in Table 1 are represented in grams.

### 1. production example

### <production example 1 (production of solution including monomer (c) -1) >

To a flask equipped with a thermometer, reflux condenser, stirrer, and dropping funnel, 270 g of propylene glycol monomethyl ether (PGM), 96 g of zinc oxide, and 3 g of water were charged, and the mixture was heated to 75°C. Subsequently, a mixture of 85 g of acrylic acid and 300 g of naphthenic acid (acid value 220 mg KOH/g) was added dropwise over 3 hours. After dropwise addition, the mixture was aged further for 2 hours, thereby obtaining a pale yellow transparent liquid. The liquid was cooled, followed by addition of PGM so that the non-volatile content would be 50%, thereby obtaining a solution including monomer (c)-1. The solids of this solution was 50.5%.

### <production example 2 (production of solution including monomer (c) -2) >

To a flask equipped with a thermometer, reflux condenser, stirrer, and dropping funnel, 350 g of propylene glycol monomethyl ether (PGM), 96 g of copper hydroxide, and 3 g of water were charged, and the mixture was heated to 75°C. Subsequently, a mixture of 70 g of acrylic acid and 330 g of hydrogenated rosin (HYPALE CH, available from ARAKAWA CHEMICAL INDUSTRIES, LTD.) was added dropwise over 3 hours. After dropwise addition, the mixture was aged further for 5 hours, thereby obtaining a dark green transparent liquid. The liquid was cooled, followed by addition of PGM so that the non-volatile content would be 50%, thereby obtaining a solution including monomer (c) -2. The solids of this solution was 50.2%.

### <production example 3 (production of copolymer solution A-1)>

To a flask equipped with a thermometer, reflux condenser, stirrer, and dropping funnel, 200 g of xylene was charged. Under nitrogen atmosphere with agitation at 85±5°C, a mixture of 270 g of triisopropyl silyl acrylate, 200 g of methyl methacrylate, 30 g of 2-methoxy ethyl acrylate, and 2.4 g of 1,1,3,3-tetramethylbutyl peroxy-2-ethyl hexanoate as a polymerization initiator was added dropwise over 2 hours. The reaction mixture was agitated at the same temperature for 1 hour, and then 0.3 g of 1,1,3,3-tetramethylbutyl peroxy-2-ethyl hexanoate was added every 1 hour for 5 times, thereby completing the polymerization reaction. Xylene was added so that the non-volatile content would be 50%, and the product was dissolved to give the triorganosilyl ester including copolymer solution A-1. Viscosity of the copolymer solution obtained was 300 mPa·s (25°C), non-volatile content was 49.5%, and Mw was 47,700.

### <production example 4 to production example 9 (production of copolymer solutions A-2 to A-7)>

Organic solvent, monomer, and polymerization initiator shown in Table 1 were used by the amount mentioned in the table, and polymerization was performed by processes similar to those of production example 3, thereby obtaining copolymer solutions A-2 to A-7. Non-volatile content, viscosity, and weight average molecular weight of each of the copolymer solutions were measured. Results are shown in Table 1.

### <production example 10 to 12 (production of other resin solutions E-1 to E-3)>

Organic solvent, monomer, and polymerization initiator shown in Table 1 were used by the amount mentioned in the table, and polymerization was performed by processes similar to those of production example 3, thereby obtaining other resin solutions E-1 to E-3. Non-volatile content, viscosity, and weight average molecular weight of each of the resin solutions were measured. Results are shown in Table 1.

**[Table 1]**

| Table 1 | | production example | | | | | | | | | |
|---|---|---|---|---|---|---|---|---|---|---|---|
| | | 3 | 4 | 5 | 6 | 7 | 8 | 9 | 10 | 11 | 12 |
| | | copolymer (A) | | | | | | | other resin (E) | | |
| organic solvent in initial reactor | xylene | 200 | 200 | 400 | 300 | 180 | 195 | 200 | 100 | 350 | 350 |
| | propylene glycol monomethyl ether | | | | | 20 | | | 100 | | |
| monomer (a) | triisopropylsilyl acrylate | 270 | 120 | | | 270 | | 120 | | | |
| | triisopropylsilyl methacrylate | | 150 | 250 | 180 | | | 120 | | | |
| | tri(2-ethylhexyl)silyl methacrylate | | | | | | 200 | 30 | | | |
| monomer (b) | 2-methoxyethyl acrylate | 30 | 10 | 50 | 40 | 30 | | 10 | | | |
| | 2-methoxyethyl methacrylate | | 100 | 170 | 100 | 20 | 110 | 80 | | 250 | 220 |
| | 2-ethoxyethyl acrylate | | | | | | | 10 | | | 10 |
| | 2-ethoxyethyl methacrylate | | | | | | | 10 | | | 5 |
| | 2-(2-ethoxyethyl)ethyl acrylate | | | | | | | 10 | | | 5 |
| monomer (c) | ethyl acrylate | | | | | 20 | | | 300 | | |
| | n-butyl acrylate | | 20 | | 80 | | 40 | 20 | | 240 | 250 |
| | methyl methacrylate | 200 | 100 | 30 | 40 | 150 | 150 | 90 | | | 5 |
| | isobutyl methacrylate | | | | 60 | | | | | | |
| | cyclohexyl acrylate | | | | | | | | 100 | | 5 |
| | styrene | | | | | | | | | 10 | |
| | monomer (c)-1 | | | | | | | | 100 | | |
| | monomer (c)-2 | | | | | 10 | | | | | |
| polymerization initiator | initial | 2.4 | 4.7 | 30.0 | 4.8 | 2.4 | 5.0 | 4.6 | 1.0 | 14.8 | 14.5 |
| | post addition 5 times | 0.3 | 0.2 | 0.3 | 0.3 | 0.3 | 0.6 | 0.4 | 0.7 | 0.7 | 0.8 |
| organic solvent added after completion of reaction | xylene | 300 | 300 | 0 | 200 | 300 | 305 | 300 | 300 | 150 | 150 |
| reaction temperature [°C] (within the range of ±5°C) | | 90 | 100 | 85 | 85 | 85 | 85 | 100 | 85 | 130 | 85 |
| property of copolymer | solids [%] | 50 | 50 | 60 | 50 | 50 | 50 | 50 | 50 | 50 | 50 |
| | weight average molecular weight [Mw] | 48.000 | 52.000 | 13,000 | 53.000 | 48.000 | 55,000 | 51,000 | 8.000 | 30,000 | 35,000 |
| | viscosity [mPa·s] (25°C) | 300 | 350 | 200 | 350 | 300 | 430 | 360 | 96 | 110 | 150 |
| | name | A-1 | A-2 | A-3 | A-4 | A-5 | A-6 | A-7 | E-1 | E-2 | E-3 |

### <production example 13 (production of rosin zinc salt solution)>

To a flask equipped with a thermometer, reflux condenser, and a stirrer, 240 g of gum rosin available from China (WW) and 360 g of xylene were charged, and 120 g of zinc oxide was added so that all of the resin acid in the rosin would form zinc salt. The reaction mixture was dehydrated under reflux under reduced pressure for 3 hours at 70 to 80°C. Then, the reaction mixture was cooled and filtered to five a xylene solution of rosin zinc salt (dark brown transparent liquid, approximately 50% solids). The non-volatile content of the xylene solution obtained was 50.6%.

### 2. Examples and Comparative Examples (production of coating composition)

The components shown in Table 2 to Table 4 were formulated by the ratio (mass%) shown in the Tables, and were mixed and dispersed with a glass bead having a diameter of 1.5 to 2.5 mm, thereby producing the coating composition.

### 3. test examples 1 and 2 (rotary test and antifouling test)

The following tests were performed with the coating compositions of Examples and Comparative Examples.

### <test example 1 (rotary test)>

A tank was provided, in the center thereof, with a rotating drum having a diameter of 515 mm and a height of 440 mm to allow the rotation of the drum by a motor. The tank was also provided with a cooling apparatus for keeping the temperature of seawater constant, and an automatic pH controller for keeping the pH of the seawater constant.

Test plates were prepared for each coating composition in accordance with the following method.

First, an anti-corrosive coating film was formed by applying an anti-corrosive coating material (an epoxy vinyl-basedA/C) onto a rigid PVC sheet (71 x 100 x 1 mm) such that the thickness after drying would be about 50 to 250 µm, followed by drying. Each of the antifouling coating compositions obtained in Examples and Comparative Examples was applied onto the anti-corrosive coating film so that the thickness after drying would be about 300 to 550 um. The applied coating was dried for 3 days at 40°C, and the test plate having an antifouling coating film was prepared.

One of the thus-prepared test plates was secured to the rotating drum of the rotary apparatus of the above-mentioned equipment and was made to contact the seawater, and the rotating drum was rotated at a speed of 20 knots. During the test, the seawater temperature was maintained at 25°C and the pH at 8. 0 to 8.2; and the seawater was replaced once every week.

The initial thickness of the coating film and the remaining thickness of the coating film as measured every 3 months from the beginning of the test were determined using a laser focus displacement meter for each test plate, and the thickness of the dissolved coating film was calculated from the difference therebetween to give the dissolving amount of the coating film per month (µm/month). The measurement was conducted for 24 months, and the dissolving amount of the coating film was calculated every 12 months.

12 months and 24 months after the rotary test, the test plate was dried, and the surface of each coating film was visually inspected to evaluate the state of the coating film. Evaluation was performed as follows.
A: No defects observed.
B: Hairline cracks are slightly observed.
C: Hairline cracks are observed on the entire surface of the coating film.
X: Coating film defects such as large cracks, blisters or peel-offs are observed.

### <test example 2 (antifouling test)>

Each of the coating compositions obtained in Examples and Comparative Examples was applied onto both surfaces of a hard vinyl chloride plate (100 x 200 x 2 mm) such that the thickness of a dry coating film would be about 200 um. The applied coating was dried for 3 days at room temperature (25°C), and the test plate having the dry coating film with a thickness of about 200 um was prepared. This test plate was immersed at 1.5 m below sea level in Owase City, Mie Prefecture, Japan, and the test plate fouling due to attached objects was examined after every 6 months.

The state of the surface of the coating film was visually evaluated in accordance with criteria shown below.
A: Fouling organisms such as shellfish or algae do not attach, and slime hardly attaches.
B: Fouling organisms such as shellfish or algae do not attach, and slime thinly attaches (to the extent that the coating film surface is observable) and the slime can be removed when wiped softly with a brush.
C: Fouling organisms such as shellfish or algae do not attach, but slime thickly attaches (to the extent that the coating film surface is not observable) and the slime cannot be removed even when wiped strongly with a brush.
X: Fouling organisms such as shellfish or algae do attach.

Results are shown in Table 2 to Table 4.

From Table 2 to Table 4, it can be understood that the coating films formed by using the coating compositions of the Examples of the present invention (Examples 1 to 28) can maintain stable film dissolution amount in all of the time periods, and can further achieve superior water resistance, anti-cracking property, and adhesion.

In addition, it is obvious that the results of Examples 1 to 28 have superior long-term antifouling performance compared with the results of Comparative Examples 1 to 4. This result is assumed to have been achieved by the combination of the copolymer (A) having a hydrolyzable silyl ester group, cuprous oxide (C), and a suitable ester compound (B), allowing achievement of balance between the film dissolution amount and the dissolution speed of the cuprous oxide (C), thereby obtaining an effect to suppress formation of a skeleton layer.

Further, it is obvious that this effect can be maintained even when the formulation of the coating composition is altered (Examples 15 to 28) .

**[Table 2]**

| component | | Example | | | | | | | | |
|---|---|---|---|---|---|---|---|---|---|---|
| | | 1 | 2 | 3 | 4 | 5 | 6 | 7 | 8 | 9 |
| copolymer (A) | A-1 | 31 | 31 | 31 | 31 | 31 | 31 | 31 | 31 | 31 |
| ester compound (B) | PAiPr | 1 | | | | | | | | |
| | DAD | | 1 | | | | | | | |
| | BAEH | | | 1 | | | | | | |
| | AADBE | | | | 1 | | | | | |
| | AAEH | | | | | 1 | | | | |
| | AADiN | | | | | | 1 | | | |
| | AzAEH | | | | | | | 1 | | |
| | DOS | | | | | | | | 1 | |
| | DEGDB | | | | | | | | | 1 |
| cupurous oxide (C) | | 45 | 45 | 45 | 45 | 45 | 45 | 45 | 45 | 45 |
| other additives (F) [pigment] | red oxide | 2 | 2 | 2 | 2 | 2 | 2 | 2 | 2 | 2 |
| | talc | 2 | 2 | 2 | 2 | 2 | 2 | 2 | 2 | 2 |
| | zinc oxide | 4 | 4 | 4 | 4 | 4 | 4 | 4 | 4 | 4 |
| | titanium oxide | 1 | 1 | 1 | 1 | 1 | 1 | 1 | 1 | 1 |
| other additives (F) [dehydrating agent, anti-sagging agent] | tetraethoxy silane | 1 | 1 | 1 | 1 | 1 | 1 | 1 | 1 | 1 |
| | aliphatic amide thixotropic agent | 4 | 4 | 4 | 4 | 4 | 4 | 4 | 4 | 4 |
| solvent | xylene | 9 | 9 | 9 | 9 | 9 | 9 | 9 | 9 | 9 |
| total | | 100 | 100 | 100 | 100 | 100 | 100 | 100 | 100 | 100 |
| test example 1 rotary test | average dissolving amount of the coating film after initial to 12 months (µm/month) | 4.6 | 4.7 | 4.5 | 4.2 | 4.0 | 4.6 | 3.9 | 5.2 | 5.3 |
| | average dissolving amount of the coating film after 12 to 24 months (µm/month) | 3.8 | 4.9 | 5.0 | 4.8 | 4.5 | 4.2 | 4.4 | 5.5 | 5.7 |
| | evaluation of condition of coatig film after 12 months | A | A | A | A | A | A | A | A | A |
| | evaluation of condition of coatig film after 24 months | A | A | A | A | A | A | A | A | A |
| test example 2 antifouling test | after 6 months | A | A | A | A | A | A | A | A | A |
| | after 12 months | A | A | A | A | A | A | A | A | A |
| | after 18 months | A | A | A | A | A | A | A | A | A |
| | after 24 months | A | A | A | A | A | A | A | A | A |
| | after 30 months | A | A | A | A | A | A | A | A | A |

**[Table 3]**

| component | | Example | | | | | Comparative Example | | | |
|---|---|---|---|---|---|---|---|---|---|---|
| | | 10 | 11 | 12 | 13 | 14 | 1 | 2 | 3 | 4 |
| copolymer (A) | A-1 | 31 | 31 | 31 | 31 | 31 | 31 | 31 | 31 | 31 |
| ester compound (B) | P-1783 | 1 | | | | | | | | |
| | m-PAEH | | 1 | | | | | | | |
| | p-PAEH | | | 1 | | | | | | |
| | TEHTM | | | | 1 | | | | | |
| | UL-80 | | | | | 1 | | | | |
| cupurous oxide (C) | | 45 | 45 | 45 | 45 | 45 | 45 | 45 | 45 | 45 |
| other additives (F) [pigment] | red oxide | 2 | 2 | 2 | 2 | 2 | 2 | 2 | 2 | 2 |
| | talc | 2 | 2 | 2 | 2 | 2 | 2 | 2 | 2 | 2 |
| | zinc oxide | 4 | 4 | 4 | 4 | 4 | 4 | 4 | 4 | 4 |
| | titanium oxide | 1 | 1 | 1 | 1 | 1 | 1 | 1 | 1 | 1 |
| other additives (F) [plasticizer] | DOP | | | | | | 1 | | | |
| | DINP | | | | | | | 1 | | |
| | DIDP | | | | | | | | 1 | |
| | ESBO | | | | | | | | | 1 |
| other additives (F) [dehydrating agent, anti-sagging agent] | tetraethoxy silane | 1 | 1 | 1 | 1 | 1 | 1 | 1 | 1 | 1 |
| | aliphatic amide thixotropic agent | 4 | 4 | 4 | 4 | 4 | 4 | 4 | 4 | 4 |
| solvent | xylene | 9 | 9 | 9 | 9 | 9 | 9 | 9 | 9 | 9 |
| total | | 100 | 100 | 100 | 100 | 100 | 100 | 100 | 100 | 100 |
| test example 1 rotary test | average dissolving amount of the coating film after initial to 12 months (µm/month) | 3.2 | 4.6 | 4.8 | 3.9 | 3.5 | 4.7 | 4.9 | 4.3 | 3.8 |
| | average dissolving amount of the coating film after 12 to 24 months (µm/month) | 3.1 | 5.1 | 5.2 | 3.8 | 3.7 | 3.9 | 4.1 | 3.7 | 2.9 |
| | evaluation of condition of coatig film after 12 months | A | A | A | A | A | A | B | B | C |
| | evaluation of condition of coatig film after 24 months | A | A | A | A | A | C | C | C | X |
| test example 2 antifouling test | after 6 months | A | A | A | A | A | A | A | A | A |
| | after 12 months | A | A | A | A | A | A | B | C | B |
| | after 18 months | A | A | A | A | A | C | C | C | X |
| | after 24 months | A | A | A | A | A | C | X | X | X |
| | after 30 months | A | A | A | A | A | X | X | X | X |

**[Table 4]**

| component | | Example | | | | | | | | | | | | | |
|---|---|---|---|---|---|---|---|---|---|---|---|---|---|---|---|
| | | 15 | 16 | 17 | 18 | 19 | 20 | 21 | 22 | 23 | 24 | 25 | 26 | 27 | 28 |
| copolymer (A) | A-1 | 31 | 6 | | | | | | | | | | | 5 | 5 |
| | A-2 | | 9 | 12.5 | 21.7 | 15.19 | 5.43 | 24.8 | 15 | | | | | 5 | |
| | A-3 | | | | | | | | | 20.6 | | | | 5 | 5 |
| | A-4 | | | | | | | | | | 15 | | | | 5 |
| | A-5 | | | | | 2.5 | | | | | | | | | 5 |
| | A-6 | | | | | | | | | | | 31 | | | |
| | A-7 | | | | | | | | | | | | 15 | | |
| ester compound (B) | PAiPr | 1 | | | | | | 0.5 | | | | | | | 0.5 |
| | AADBE | | | | 0.5 | | 1 | | | 0.5 | | | | | 0.5 |
| | AADiN | | | | | 0.5 | | | 1 | | | | | | |
| | DEGDB | | | | | | | | 1 | | | 1 | 0.5 | 0.5 | 0.5 |
| | P-1783 | | 0.5 | | | | 1 | | | | | 0.5 | | | 0.5 |
| | m-PAEH | | | 2.5 | | | | | | | | 1 | 0.5 | 0.5 | 0.5 |
| | p-PAEH | 1.5 | 1.5 | | | | | | | | | | 0.5 | | |
| | TEHTM | | | | 1 | | 1 | | | 1 | 2.5 | | 0.5 | 0.5 | 0.5 |
| | UL-80 | | | | | 1 | | 1 | | | | | 0.5 | 0.5 | 0.5 |
| cupurous oxide (C) | | 45 | 30 | 30 | 30 | 30 | 30 | 45 | 45 | 45 | 30 | 45 | 30 | 30 | 15 |
| antifouling agent (G) | copper pyrithione | 3 | 1.5 | 1.5 | 1.5 | 1.5 | 1.5 | 3 | 2 | 3 | 1.5 | 3 | 1.5 | | |
| | zinc pyrithione | | | | | | | | | | | | 1.5 | 3 | |
| | copper rhodanide | | | | | | | | 1 | | | | | | |
| | Zineb | | | | | | | | 2 | | | | | | |
| | SeaNine | | 0.5 | | | 0.5 | | | | | 0.5 | | 2 | 2 | 3 |
| | Econea | | | | | | 1 | | | | | | 0.5 | 0.5 | |
| | medetomidine | | 0.5 | 1 | 1 | | | | | | 0.5 | | 0.5 | 0.5 | |
| thermoplastic resin (D) | rosin solution | | 7 | | | | | | | | | | | | |
| | rosin zinc salt solution | | 7 | 14 | 9.3 | 9.3 | 9.3 | 6.2 | | 6.2 | 14 | | 2 | 2 | 5 |
| | hydrogenated rosin solution | | | | | | | | 1 | | | | | | |
| | NT-RMZ | | | | | | | | 7.5 | | | | 3 | 4 | 10 |
| | MP25 | | | 1 | | | | | | | | | | | |
| | EVA15 | | 0.5 | | | | | | | | | | | | |
| | TP-217 | | 0.5 | | | | | | | | | | | | |
| | TP-290 | | | 0.5 | | | | | | | | | | | |
| other resin (E) | E-1 | | | 2.5 | | | | | | | | | | | 2 |
| | E-2 | | | | | 401 | 16.28 | | | | | | | | 2 |
| | E-3 | | | | | | | | | | | | 8.5 | 8 | 5 |
| other additives (F) [pigment] | red oxide | 2 | 2 | 2 | 2 | 2 | 2 | 2 | 2 | 2 | 2 | 2 | 2 | 2 | 2 |
| | talc | 2 | 7 | 7 | 7 | 7 | 7 | 2 | 3 | 2 | 7 | 2 | 7 | 7 | 7 |
| | zinc oxide | 4 | 14 | 14 | 14 | 14 | 14 | 4 | 2 | 4 | 14 | 4 | 14 | 14 | 14 |
| | titanium oxide | 1 | 1 | 1 | 1 | 1 | 1 | 1 | 1 | 1 | 1 | 1 | 1 | 1 | 1 |
| other additives (F) [dehydrating agent, anti- | tetraethoxy silane | 1 | 0.5 | 0.5 | 0.5 | 0.5 | 0.5 | 1 | 0.5 | 1 | 0.5 | 1 | 0.5 | 0.5 | 1 |
| | calcium sulfate anhydrite | | | | | | | | | | 0.5 | | | | 1 |
| | aliphatic amide thixotropic agent | 4 | 2 | 2 | 3 | 3 | 3 | 4 | 3 | 4 | 2 | 4 | 4 | 4 | 4 |
| solvent | xylene | 4.5 | 8.5 | 8 | 7.5 | 8 | 6 | 5.5 | 13 | 9.7 | 9 | 4.5 | 4.5 | 4.5 | 4.5 |
| total | | 100 | 100 | 100 | 100 | 100 | 100 | 100 | 100 | 100 | 100 | 100 | 100 | 100 | 100 |
| test example 1 rotary test | average dissolving amount of the coating film after initial to 12 months (µm/month) | 5.1 | 6.7 | 6.2 | 5.9 | 5.6 | 6.3 | 5.3 | 5.7 | 6.2 | 5.4 | 2.8 | 6.1 | 6.4 | 7.5 |
| | average dissolving amount of the coating film after 12 to 24 months (µm/month) | 5.7 | 7.1 | 6.5 | 6.1 | 6.0 | 5.9 | 5.7 | 5.8 | 6.4 | 4.9 | 3.2 | 6.0 | 6.7 | 7.8 |
| | evaluation of condition of coating film after 12 months | A | A | A | A | A | A | A | A | A | A | A | A | A | A |
| | evaluation of condition of coatig film after 24 months | A | B | B | A | A | B | A | A | B | B | B | B | A | B |
| test example 2 antifouling test | after 6 months | A | A | A | A | A | A | A | A | A | A | A | A | A | A |
| | after 12 months | A | A | A | A | A | A | A | A | A | A | A | A | A | A |
| | after 18 months | A | A | A | A | A | A | A | A | A | A | A | A | A | A |
| | after 24 months | A | A | A | A | A | A | A | A | A | A | A | A | A | A |
| | after 30 months | A | A | A | A | A | A | A | A | A | A | A | A | A | B |

Details of each of the components mentioned in Table 2 to Table 4 are as follows.

### (ester compound (B))

### [ester compound (3)]

PAiPr: isopropyl palmitate: product name "Isopropyl Palmitate" (available from TOKYO CHEMICAL INDUSTRY CO., LTD.)
DAD: decyl decanoate: product name "Decyl Decanoate" (available from TOKYO CHEMICAL INDUSTRY CO., LTD.)
BAEH: 2-ethylhexyl benzoate: product name "2-Ethylhexyl Benzoate" (available from TOKYO CHEMICAL INDUSTRY CO., LTD.)

### [ester compound (4)]

AADBE: di(2-butoxyethyl) adipate: product name "Bis(2-butoxyethyl) Adipate" (available from TOKYO CHEMICAL INDUSTRY CO., LTD.)
AAEH: di(2-ethylhexyl) adipate: product name "Bis(2-ethylhexyl) Adipate" (available from TOKYO CHEMICAL INDUSTRY CO., LTD.)
AADiN: diisononyl adipate: product name "Diisononyl Adipate" (available from Wako Pure Chemical Industries, Ltd.)
AzAEH: di(2-ethylhexyl) azelate: product name "Bis(2-ethylhexyl) Azelate" (available from TOKYO CHEMICAL INDUSTRY CO., LTD.)
DOS: di (2-ethylhexyl) sebacate: product name "SANSO CIZER DOS" (available from New Japan Chemical Co., Ltd.)

### [ester compound (5)]

DEGDB: diethylene glycol dibenzoate: product name "Diethylene Glycol Dibenzoate" (available from TOKYO CHEMICAL INDUSTRY CO., LTD.)
P-1783: triethylene glycol di(2-ethylhexanoate): product name "Proviplast 1783" (available from SANKO CO., LTD.)

### [ester compound (6)]

m-PAEH: di(2-ethylhexyl) isophthalate: product name "Bis(2-ethylhexyl) Isophthalate" (available from TOKYO CHEMICAL INDUSTRY CO., LTD.)

### [ester compound (7)]

p-PAEH: di(2-ethylhexyl) terephthalate: product name "Bis(2-ethylhexyl) terephthalate" (available from Sigma-Aldrich, Inc.)

### [ester compound (8)] (not being part of the invention as granted).

TEHTM: tris(2-ethylhexyl) trimellitate: product name "Tris(2-ethylhexyl) Trimellitate" (available from TOKYO CHEMICAL INDUSTRY CO., LTD.) . Example 13 contains TEHTM and does not form part of the invention since esters of formula/compound 8 are not part of the invention.

### [ester compound (9)]

UL-80: tetra(2-ethylhexyl) pyromellitate: product name "UL-80" (available from ADEKA Corporation)

### (cuprous oxide (C))

cuprous oxide: product name "NC-301" (available from NISSIN CHEMCO

### (thermoplastic resin (D))

rosin solution : xylene solution (50% solids) of Chinese gum rosin (WW)
rosin zinc salt solution: The one produced in production example 13 was used.
hydrogenated rosin solution: product name "HYPALE CH" (50% solids xylene solution, available from ARAKAWA CHEMICAL INDUSTRIES, LTD.)
NT-RMZ: hydrogenated rosin zinc salt solution: product name "NT-RMZ", 65% solids (available from Nitto Kasei Co., Ltd.)
MP 25: product name "Laroflex (registered tradename) MP 25" (available from BASF Dispersions & Resins)
EVA 15: product name "Novatec ^{™} EVA LV440" (available from Japan Polyethylene Corporation)
TP-217: product name "Nichigo-POLYESTER^{™} TP-217" (available from The Nippon Synthetic Chemical Industry Co., Ltd.)
TP-290: product name "Nichigo-POLYESTER^{™} TP-290" (available from The Nippon Synthetic Chemical Industry Co., Ltd.)

### (additives (F)) [pigments]

red oxide: product name "TODA COLOR EP-13D" (available from Toda Pigment Corp.)
talc: product name "CROWN TALC 3S" (available from matsumura sangyo Co., Ltd.)
zinc oxide: product name "zinc oxide II" (available from Seido Chemical Industry Co., Ltd.)
titanium oxide: product name "FR-41" (available from FURUKAWA CO., LTD.)

### (additives (F)) [plasticizers]

DOP: dioctyl phthalate: product name "DOP" (available from Mitsubishi Chemical Corporation)
DINP: diisononyl phthalate: product name "Diisononyl Phthalate" (available from Wako Pure Chemical Industries, Ltd.)
DIDP: diisodecyl phthalate: product name "Diisodecyl Phthalate" (available from Wako Pure Chemical Industries, Ltd.)
ESBO: epoxidized soybean oil: product name "SANSO CIZER E-2000H" (available from New Japan Chemical Co., Ltd.)

### (additives (F)) [dehydrating agent, anti-sagging agent]

Tetraethoxysilane: product name "Tetraethyl Orthosilicate" (available from TOKYO CHEMICAL INDUSTRY CO., LTD.)
aliphatic amide thixotropic agent: product name "Disparlon A603-20X" (available from Kusumoto Chemicals, Ltd.)
calcium sulfate anhydrite: product name "D-1" (available from NORITAKE CO., LIMITED)

### (antifouling agent (G))

copper pyrithione : product name "copper Omadine" (available from Arch Chemical, Inc.)
zinc pyrithione: product name "zinc Omadine" (available from Arch Chemical, Inc.)
copper rhodanide: product name "cuprous thiocyanate (I)" (available from Sigma-Aldrich, Inc.)
Zineb: product name "Zineb" (available from Sigma-Aldrich, Inc.)
Sea Nine: product name "Sea Nine 211" (4,5-dichloro-2-n-octyl-3-(2H)isothiazoline, 30% solids, xylene solution, available from Rohm & Haas, Inc.)
Econia: product name "Econea 028" (2-(p-chlorophenyl)3-cyano-4-bromo-5-trifluoromethyl pyrrole, available from JANSSEN PMP)
medetomidine: product name "4-(1-(2,3-Dimethylphenyl)ethyl)-1H-imidazole" (available from Wako Pure Chemical Industries, Ltd.)

### 4. test example 3 (elemental analysis of coating film layer)

Rotary test was carried out for 18 months in a similar manner as test example 1 (rotary test). Subsequently, the test plates were dried at 25°C for 72 hours. Then, white water-borne epoxy coating including titanium oxide was coated on the test piece so that the dried film thickness would be approximately 200 to 500 µm, followed by drying at 25°C for 72 hours.

The test piece after the rotary test was protected by the afore-mentioned process, and was then trimmed into an optimal size, followed by cross-sectional cutting and surface polishing thereof, and was used as SEM-EDS measurement sample.

As a pre-treatment of SEM-EDS measurement, the measurement sample was subjected to osmium deposition, and then SEM observation of the cross section of the test piece (acceleration voltage 20 kV, magnification 230 times) and element mapping (Cu, Fe, Ti) by EDS analysis were performed using SEM-EDS (JSM-6335F, available from JEOL Ltd.). Accordingly, SEM image and element mapping image were obtained. The measurement time of the element mapping by EDS was approximately 12 minutes. Distribution range of Cu, Fe, and Ti are each displayed, and each of the images including SEM image (four small images at left) is displayed with overlapping (one large image at right) to determine presence or non-presence of a layer (skeleton layer) with Cu elution derived from cuprous oxide (C) as antifouling agent, followed by measurement of the thickness of such layer by um order.

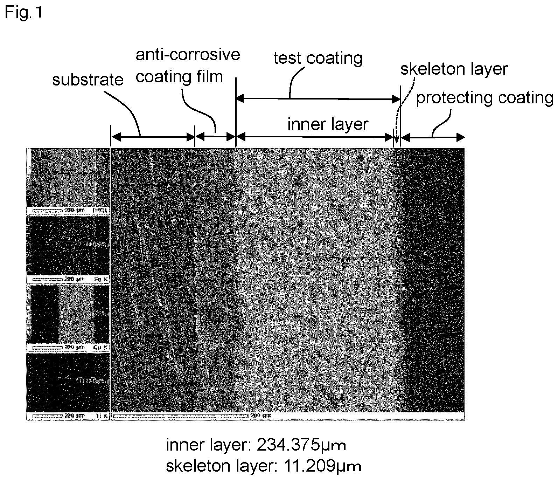

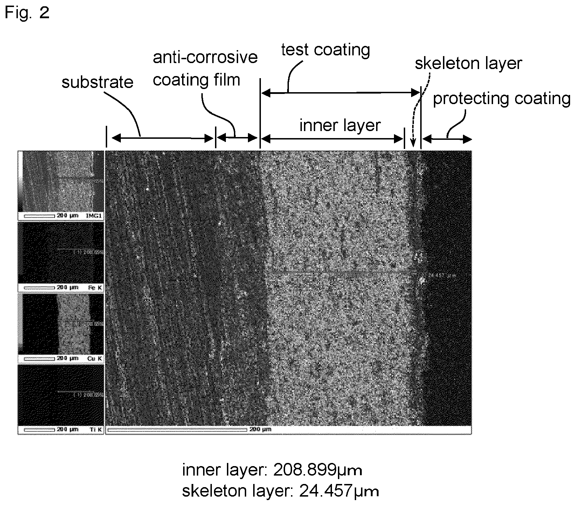

Measurement results are shown in Fig. 1 and Fig. 2. Fig. 1 is a result obtained with the coating film made from the coating of Example 1, and Fig. 2 is a result obtained with the coating film made from the coating of Comparative Example 1. In Fig. 1, a layer having no Cu distribution is formed by a thickness of 11 pm in the surface layer. In contrast, in Fig. 2, such layer is formed by a thickness of 24 um, which is more than a double. In addition, Fe is distributed in the layer having no Cu distribution.

Cu is considered to be derived from cuprous oxide, and Fe is considered to be derived from red oxide. Therefore, the layer having no Cu distribution in the surface layer of the coating film is assumed to be a layer in which the cuprous oxide (C) as the antifouling agent have eluted from the surface layer during the 18 months rotary test period, thereby leaving red oxide, resin, and other components as residue. This result supports the test result of test example 1 in the rotary test in which the condition of the coating film was degraded after 24 months even when the coating film continues to dissolve, and the test result of test example 2 in the antifouling test in which the antifouling property degraded after 18 months.

## Claims

1. An antifouling coating composition, comprising:
a copolymer (A);
an ester compound (B); and
a cuprous oxide (C); wherein:
the copolymer (A) is a triorganosilyl ester including copolymer obtained from a mixture of triorganosilyl group including monomer (a), oxygen atom containing monomer (b), and ethylenically unsaturated monomer (c);
the monomer (a) is represented by chemical formula (1);
the monomer (b) is represented by chemical formula (2);
the monomer (c) is a monomer other than the monomer (a) and the monomer (b), and can copolymerize with the monomer (a) and the monomer (b);
the ester compound (B) comprises at least one ester compound represented by chemical formula (3) to (7) and (9). 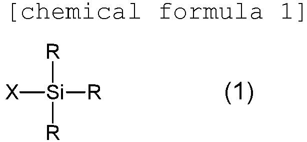
wherein, three R are the same or different from each other, and represent a C3-C8 hydrocarbon group branched at its α-position or at its β-position; and the hydrocarbon group is an aliphatic or an aromatic, and has a linear, branched, or ring structure; X represents an acryloyloxy group, methacryloyloxy group, maleinoyloxy group, fumaroyloxy group or itaconoyloxy group;
Y-R ··· (2)
wherein, R represents C2-C10 alkyl group or aryl group having an oxygen atom; and Y represents an acryloyloxy group, methacryloyloxy group, maleinoyloxy group, fumaroyloxy group or itaconoyloxy group; 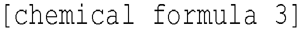 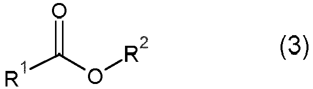
wherein, each of R¹ and R² is a hydrocarbon group which can include a hetero atom, the number of carbon atoms of R¹ is 2 to 22, the number of carbon atoms of R² is 1 to 22, and the hydrocarbon group is an aliphatic or an aromatic, and has a linear, branched, or cyclic structure; 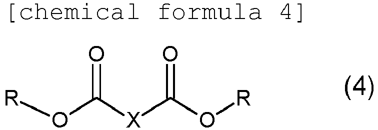
wherein, each of X and R is a C1-C22 hydrocarbon group which can include a hetero atom, and the hydrocarbon group is an aliphatic or an aromatic, and has a linear, branched, or cyclic structure. The two R are the same or different from each other; 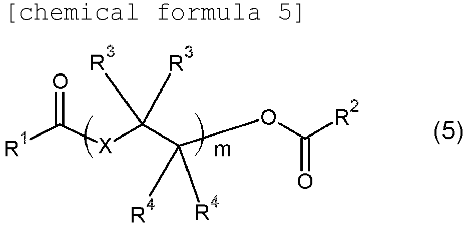
wherein, X is an oxygen atom or a C1-C22 hydrocarbon group including an oxygen atom, and the hydrocarbon group is an aliphatic or an aromatic, and has a linear, branched, or cyclic structure. Each of R¹ and R² is a C1-C22 hydrocarbon group which can include a hetero atom, and the hydrocarbon group is an aliphatic or an aromatic, and has a linear, branched, or cyclic structure. Each of R³ and R⁴ is a hydrogen atom or a C1-C22 hydrocarbon group which can include a hetero atom, and the hydrocarbon group is an aliphatic or an aromatic, and has a linear, branched, or cyclic structure. m is an integer of 1 to 20. The two R³ are the same or different from each other. The two R⁴ are the same or different from each other; 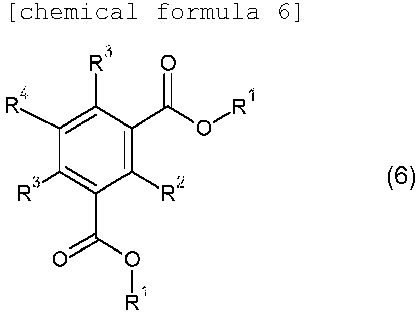
wherein, two R¹ are the same or different, and are each a C1-C22 hydrocarbon group which can include a hetero atom, and the hydrocarbon group is an aliphatic or an aromatic, and has a linear, branched, or cyclic structure. Each of R² to R⁴ is a hydrogen atom or a C1-C22 hydrocarbon group which can include a hetero atom, and the hydrocarbon group is an aliphatic or an aromatic, and has a linear, branched, or cyclic structure. The two R³ are the same or different from each other; 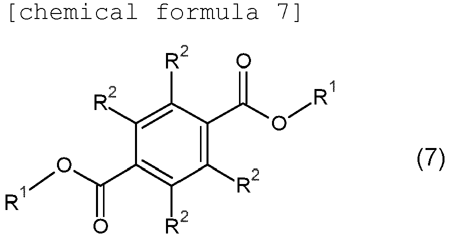
wherein, two R¹ are the same or different, and are each a C1-C22 hydrocarbon group which can include a hetero atom, and the hydrocarbon group is an aliphatic or an aromatic, and has a linear, branched, or cyclic structure. Four R⁴ are the same or different from each other, and are each a hydrogen atom or a C1-C22 hydrocarbon group which can include a hetero atom, and the hydrocarbon group is an aliphatic or an aromatic, and has a linear, branched, or cyclic structure; 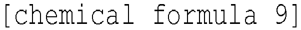 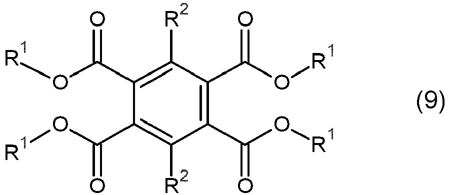
wherein, four R¹ are the same or different, and are each a C1-C22 hydrocarbon group which can include a hetero atom, and the hydrocarbon group is an aliphatic or an aromatic, and has a linear, branched, or cyclic structure. Two R² are the same or different from each other, and are each a hydrogen atom or a C1-C22 hydrocarbon group which can include a hetero atom, and the hydrocarbon group is an aliphatic or an aromatic, and has a linear, branched, or cyclic structure.

2. The antifouling coating composition of Claim 1, wherein the ester compound (B) comprises the ester compound represented by chemical formula (7).

3. The antifouling coating composition of Claim 2, wherein R² of chemical formula (7) is hydrogen atom.

4. The antifouling coating composition of any one of Claims 1 to 3, wherein the ester compound (B) comprises the ester compound represented by chemical formula (6).

5. The antifouling coating composition of Claim 4, wherein R² to R⁴ of chemical formula (6) is hydrogen atom.

6. The antifouling coating composition of any one of Claims 1 to 5, wherein the ester compound (B) comprises the ester compound represented by chemical formula (9).

7. The antifouling coating composition of Claim 6, wherein R² of chemical formula (9) is hydrogen atom.

8. The antifouling coating composition of any one of Claims 1 to 7, wherein the ester compound (B) comprises the ester compound represented by chemical formula (4).

9. The antifouling coating composition of Claim 8, wherein X in chemical formula (4) is C2-C16 alkylene group.

10. The antifouling coating composition of any one of Claims 1 to 9, wherein the ester compound (B) comprises the ester compound represented by chemical formula (5).

11. The antifouling coating composition of Claim 10, wherein X in chemical formula (5) is oxygen atom, and R³ and R⁴ in chemical formula (5) are hydrogen atom.

12. The antifouling coating composition of any one of Claims 1 to 11, wherein the ester compound (B) comprises the ester compound represented by chemical formula (3).

13. The antifouling coating composition of Claim 12, wherein R¹ of chemical formula (3) has an aromatic ring.

14. The antifouling coating composition of Claim 12, wherein R¹ of chemical formula (3) is an aliphatic hydrocarbon group which can include a hetero atom.

15. A coated object having an antifouling coating film on a surface thereof, the antifouling coating film being formed using the antifouling coating composition of any one of Claims 1 to 14.

## Patentansprüche

1. Antifouling-Beschichtungszusammensetzung, umfassend:
ein Copolymer (A);
eine Esterverbindung (B); und
ein Kupferoxid (C); wobei:
das Copolymer (A) ein Triorganosilylester enthaltendes Copolymer ist, das aus einem Gemisch aus einem eine Triorganosilylgruppe enthaltenden Monomer (a) , einem ein Sauerstoffatom enthaltenden Monomer (b) und einem ethylenisch ungesättigten Monomer (c) erhalten wurde;
das Monomer (a) durch die chemische Formel (1) dargestellt ist;
das Monomer (b) durch die chemische Formel (2) dargestellt ist;
das Monomer (c) ein anderes Monomer als das Monomer (a) und das Monomer (b) ist und mit dem Monomer (a) und dem Monomer (b) copolymerisieren kann;
die Esterverbindung (B) mindestens eine Esterverbindung umfasst, die durch die chemischen Formel (3) bis (7) und (9) dargestellt ist. 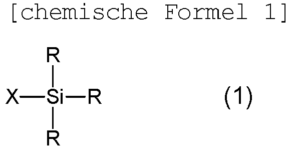
wobei drei R gleich oder verschieden voneinander sind und eine C3-C8-Kohlenwasserstoffgruppe darstellen, die an ihrer α-Position oder an ihrer β-Position verzweigt ist; und die Kohlenwasserstoffgruppe ein Aliphat oder ein Aromat ist und eine lineare, verzweigte oder Ringstruktur aufweist; X eine Acryloyloxygruppe, Methacryloyloxygruppe, Maleinoyloxygruppe, Fumaroyloxygruppe oder Itaconoyloxygruppe darstellt;
Y-R··· (2)
wobei R eine C2-C10-Alkylgruppe oder -Arylgruppe mit einem Sauerstoffatom darstellt; und Y eine Acryloyloxygruppe, Methacryloyloxygruppe, Maleinoyloxygruppe, Fumaroyloxygruppe oder Itaconoyloxygruppe darstellt; 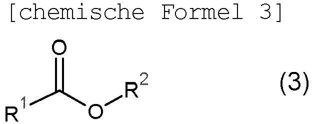
wobei R¹ und R² jeweils eine Kohlenwasserstoffgruppe ist, die ein Heteroatom enthalten kann, die Anzahl der Kohlenstoffatome von R¹ 2 bis 22 beträgt, die Anzahl der Kohlenstoffatome von R² 1 bis 22 beträgt und die Kohlenwasserstoffgruppe ein Aliphat oder ein Aromat ist und eine lineare, verzweigte oder zyklische Struktur aufweist; 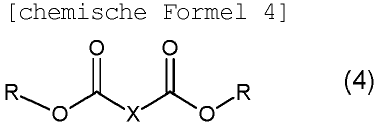
wobei X und R jeweils eine C1-C22-Kohlenwasserstoffgruppe sind, die ein Heteroatom enthalten kann, und die Kohlenwasserstoffgruppe ein Aliphat oder ein Aromat ist und eine lineare, verzweigte oder zyklische Struktur aufweist. Die beiden R sind gleich oder verschieden voneinander; 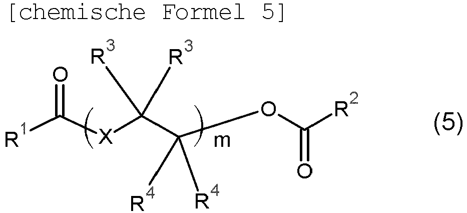
wobei X ein Sauerstoffatom oder eine C1-C22-Kohlenwasserstoffgruppe, die ein Sauerstoffatom enthält, ist und die Kohlenwasserstoffgruppe ein Aliphat oder ein Aromat ist und eine lineare, verzweigte oder zyklische Struktur aufweist. R¹ und R² sind jeweils eine C1-C22-Kohlenwasserstoffgruppe, die ein Heteroatom enthalten kann, und die Kohlenwasserstoffgruppe ist ein Aliphat oder ein Aromat und weist eine lineare, verzweigte oder zyklische Struktur auf. R³ und R⁴ sind jeweils ein Wasserstoffatom oder eine C1-C22-Kohlenwasserstoffgruppe, die ein Heteroatom enthalten kann, und die Kohlenwasserstoffgruppe ist ein Aliphat oder ein Aromat und weist eine lineare, verzweigte oder zyklische Struktur auf. m ist eine ganze Zahl von 1 bis 20. Die beiden R³ sind gleich oder verschieden voneinander. Die beiden R⁴ sind gleich oder verschieden voneinander; 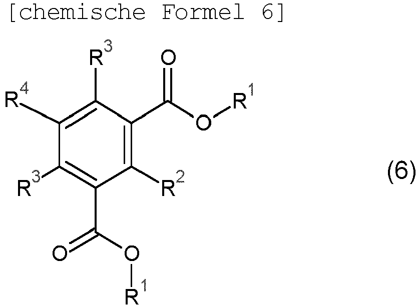
wobei zwei R¹ gleich oder verschieden sind und jeweils eine C1-C22-Kohlenwasserstoffgruppe sind, die ein Heteroatom enthalten kann, und die Kohlenwasserstoffgruppe ein Aliphat oder ein Aromat ist und eine lineare, verzweigte oder zyklische Struktur aufweist. R² bis R⁴ sind jeweils ein Wasserstoffatom oder eine C1-C22-Kohlenwasserstoffgruppe, die ein Heteroatom enthalten kann, und die Kohlenwasserstoffgruppe ist ein Aliphat oder ein Aromat und weist eine lineare, verzweigte oder zyklische Struktur auf. Die beiden R³ sind gleich oder verschieden voneinander; 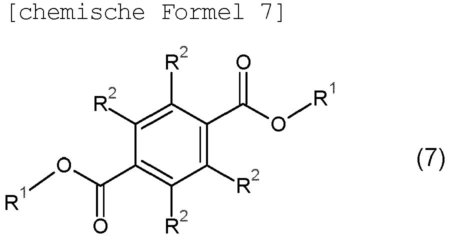
wobei zwei R¹ gleich oder verschieden sind und jeweils eine C1-C22-Kohlenwasserstoffgruppe sind, die ein Heteroatom enthalten kann, und die Kohlenwasserstoffgruppe ein Aliphat oder ein Aromat ist und eine lineare, verzweigte oder cyclische Struktur aufweist. Vier R⁴ sind gleich oder verschieden voneinander und sind jeweils ein Wasserstoffatom oder eine C1-C22-Kohlenwasserstoffgruppe, die ein Heteroatom enthalten kann, und die Kohlenwasserstoffgruppe ist ein Aliphat oder ein Aromat und weist eine lineare, verzweigte oder zyklische Struktur auf; 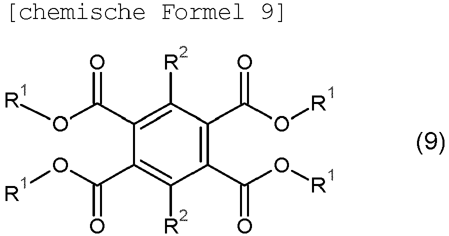
wobei vier R¹ gleich oder verschieden sind und jeweils eine C1-C22-Kohlenwasserstoffgruppe sind, die ein Heteroatom aufweisen kann, und die Kohlenwasserstoffgruppe ein Aliphat oder ein Aromat ist und eine lineare, verzweigte oder cyclische Struktur aufweist. Zwei R² sind gleich oder verschieden voneinander und sind jeweils ein Wasserstoffatom oder eine C1-C22-Kohlenwasserstoffgruppe, die ein Heteroatom enthalten kann, und die Kohlenwasserstoffgruppe ist ein Aliphat oder ein Aromat und weist eine lineare, verzweigte oder zyklische Struktur auf.

2. Antifouling-Beschichtungszusammensetzung nach Anspruch 1, wobei die Esterverbindung (B) die durch die chemische Formel (7) dargestellte Esterverbindung umfasst.

3. Antifouling-Beschichtungszusammensetzung nach Anspruch 2, wobei R² der chemischen Formel (7) ein Wasserstoffatom ist.

4. Antifouling-Beschichtungszusammensetzung nach einem der Ansprüche 1 bis 3, wobei die Esterverbindung (B) die durch die chemische Formel (6) dargestellte Esterverbindung umfasst.

5. Antifouling-Beschichtungszusammensetzung nach Anspruch 4, wobei R² bis R⁴ der chemischen Formel (6) ein Wasserstoffatom ist.

6. Antifouling-Beschichtungszusammensetzung nach einem der Ansprüche 1 bis 5, wobei die Esterverbindung (B) die durch die chemische Formel (9) dargestellte Esterverbindung umfasst.

7. Antifouling-Beschichtungszusammensetzung nach Anspruch 6, wobei R² der chemischen Formel (9) ein Wasserstoffatom ist.

8. Antifouling-Beschichtungszusammensetzung nach einem der Ansprüche 1 bis 7, wobei die Esterverbindung (B) die durch die chemische Formel (4) dargestellte Esterverbindung umfasst.

9. Antifouling-Beschichtungszusammensetzung nach Anspruch 8, wobei X in der chemischen Formel (4) eine C2-C16-Alkylengruppe ist.

10. Antifouling-Beschichtungszusammensetzung nach einem der Ansprüche 1 bis 9, wobei die Esterverbindung (B) die durch die chemische Formel (5) dargestellte Esterverbindung umfasst.

11. Antifouling-Beschichtungszusammensetzung nach Anspruch 10, wobei X in der chemischen Formel (5) ein Sauerstoffatom ist und R³ und R⁴ in der chemischen Formel (5) ein Wasserstoffatom sind.

12. Antifouling-Beschichtungszusammensetzung nach einem der Ansprüche 1 bis 11, wobei die Esterverbindung (B) die durch die chemische Formel (3) dargestellte Esterverbindung umfasst.

13. Antifouling-Beschichtungszusammensetzung nach Anspruch 12, wobei R¹ der chemischen Formel (3) einen aromatischen Ring aufweist.

14. Antifouling-Beschichtungszusammensetzung nach Anspruch 12, wobei R¹ der chemischen Formel (3) eine aliphatische Kohlenwasserstoffgruppe ist, die ein Heteroatom enthalten kann.

15. Beschichteter Gegenstand mit einem Antifouling-Beschichtungsfilm auf seiner Oberfläche, wobei der Antifouling-Beschichtungsfilm unter Verwendung der Antifouling-Beschichtungszusammensetzung nach einem der Ansprüche 1 bis 14 ausgebildet ist.

## Revendications

1. Composition de revêtement antisalissure, comprenant :
un copolymère (A) ;
un composé ester (B) ; et
un oxyde cuivreux (C) ; dans laquelle :
le copolymère (A) est un ester triorganosilylique comprenant un copolymère obtenu à partir d'un mélange de monomère comprenant un groupe triorganosilylique (a), de monomère contenant un atome d'oxygène (b) et de monomère éthyléniquement insaturé (c) ;
le monomère (a) est représenté par la formule chimique (1) ;
le monomère (b) est représenté par la formule chimique (2) ;
le monomère (c) est un monomère autre que le monomère (a) et le monomère (b), et peut copolymériser avec le monomère (a) et le monomère (b) ;
le composé ester (B) comprend au moins un composé ester représenté par la formule chimique (3) à (7) et (9). 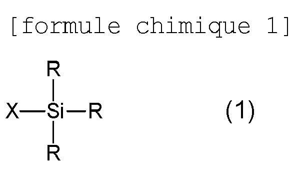
où, trois R sont identiques ou différents les uns des autres, et représentent un groupe d'hydrocarbures C3-C8 ramifié en position α ou en position β ; et le groupe d'hydrocarbures est aliphatique ou aromatique, et a une structure linéaire, ramifiée ou cyclique ; X représente un groupe acryloyloxy, un groupe méthacryloyloxy, un groupe maléinoyloxy, un groupe fumaroyloxy ou un groupe itaconoyloxy ;
Y-R ··· (2)
où R représente un groupe alkyle C2-C10 ou un groupe aryle ayant un atome d'oxygène ; et Y représente un groupe acryloyloxy, un groupe méthacryloyloxy, un groupe maleinoyloxy, un groupe fumaroyloxy ou un groupe itaconoyloxy ; 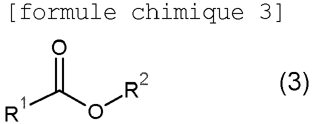
où R¹ et R² sont chacun un groupe d'hydrocarbures pouvant inclure un hétéroatome, le nombre d'atomes de carbone de R¹ est compris entre 2 et 22, le nombre d'atomes de carbone de R² est compris entre 1 et 22, et le groupe d'hydrocarbures est aliphatique ou aromatique et présente une structure linéaire, ramifiée ou cyclique ; 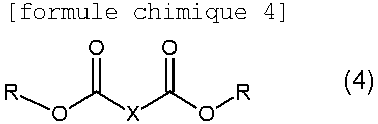
où X et R sont chacun un groupe d'hydrocarbures en C1-C22 pouvant inclure un hétéroatome, et le groupe d'hydrocarbures est aliphatique ou aromatique et présente une structure linéaire, ramifiée ou cyclique. Les deux R sont identiques ou différents l'un de l'autre ; 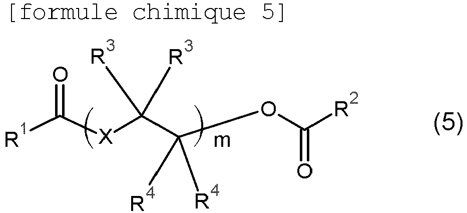
où X est un atome d'oxygène ou un groupe d'hydrocarbures en C1-C22 comprenant un atome d'oxygène, et le groupe d'hydrocarbures est aliphatique ou aromatique, et a une structure linéaire, ramifiée ou cyclique. Chacun des R¹ et R² est un groupe d'hydrocarbures en C1-C22 qui peut inclure un hétéroatome, et le groupe d'hydrocarbures est aliphatique ou aromatique, et a une structure linéaire, ramifiée ou cyclique. Chacun des R³ et R⁴ est un atome d'hydrogène ou un groupe d'hydrocarbures en C1-C22 pouvant inclure un hétéroatome, et le groupe d'hydrocarbures est aliphatique ou aromatique, et a une structure linéaire, ramifiée ou cyclique. m est un nombre entier de 1 à 20. Les deux R³ sont identiques ou différents l'un de l'autre. Les deux R⁴ sont identiques ou différents l'un de l'autre ; 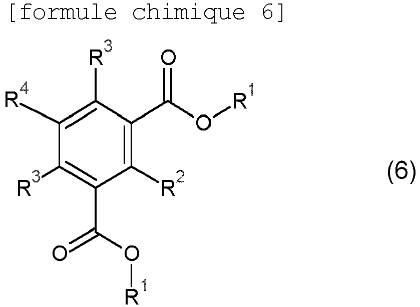
où deux R¹ sont identiques ou différents, et sont chacun un groupe d'hydrocarbures en C1-C22 pouvant inclure un hétéroatome, et le groupe d'hydrocarbures est aliphatique ou aromatique, et a une structure linéaire, ramifiée ou cyclique. Chacun des R² à R⁴ est un atome d'hydrogène ou un groupe d'hydrocarbures en C1-C22 pouvant inclure un hétéroatome, et le groupe d'hydrocarbures est aliphatique ou aromatique, et a une structure linéaire, ramifiée ou cyclique. Les deux R³ sont identiques ou différents l'un de l'autre ; 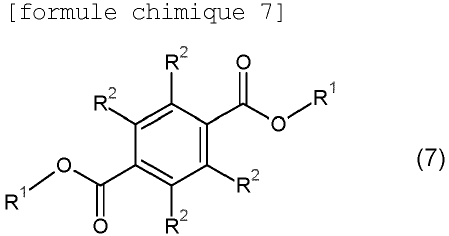
où deux R¹ sont identiques ou différents et sont chacun un groupe d'hydrocarbures en C1-C22 pouvant inclure un hétéroatome, et le groupe d'hydrocarbures est aliphatique ou aromatique et a une structure linéaire, ramifiée ou cyclique. Quatre R⁴ sont identiques ou différents les uns des autres et sont chacun un atome d'hydrogène ou un groupe d'hydrocarbures en C1-C22 pouvant inclure un hétéroatome, et le groupe d'hydrocarbures est aliphatique ou aromatique et a une structure linéaire, ramifiée ou cyclique ; 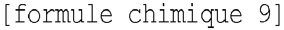 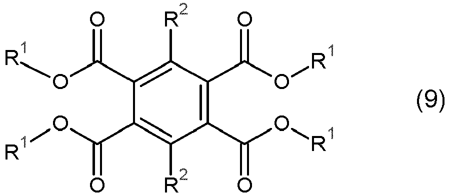
où quatre R¹ sont identiques ou différents, et sont chacun un groupe d'hydrocarbures en C1-C22 qui peut inclure un hétéroatome, et le groupe d'hydrocarbures est aliphatique ou aromatique, et a une structure linéaire, ramifiée ou cyclique. Deux R² sont identiques ou différents l'un de l'autre et sont chacun un atome d'hydrogène ou un groupe d'hydrocarbures en C1-C22 pouvant inclure un hétéroatome, et le groupe d'hydrocarbures est aliphatique ou aromatique et a une structure linéaire, ramifiée ou cyclique.

2. Composition de revêtement antisalissure de la revendication 1, dans laquelle le composé ester (B) comprend le composé ester représenté par la formule chimique (7).

3. Composition de revêtement antisalissure de la revendication 2, dans laquelle R² de la formule chimique (7) est un atome d'hydrogène.

4. Composition de revêtement antisalissure de l'une quelconque des revendications 1 à 3, dans laquelle le composé ester (B) comprend le composé ester représenté par la formule chimique (6).

5. Composition de revêtement antisalissure de la revendication 4, dans laquelle R² à R⁴ de la formule chimique (6) est un atome d'hydrogène.

6. Composition de revêtement antisalissure de l'une quelconque des revendications 1 à 5, dans laquelle le composé ester (B) comprend le composé ester représenté par la formule chimique (9).

7. Composition de revêtement antisalissure de la revendication 6, dans laquelle R² de formule chimique (9) est un atome d'hydrogène.

8. Composition de revêtement antisalissure de l'une quelconque des revendications 1 à 7, dans laquelle le composé ester (B) comprend le composé ester représenté par la formule chimique (4).

9. Composition de revêtement antisalissure de la revendication 8, dans laquelle X dans la formule chimique (4) est un groupe alkylène C2-C16.

10. Composition de revêtement antisalissure de l'une quelconque des revendications 1 à 9, dans laquelle le composé ester (B) comprend le composé ester représenté par la formule chimique (5).

11. Composition de revêtement antisalissure de la revendication 10, dans laquelle X dans la formule chimique (5) est un atome d'oxygène, et R³ et R⁴ dans la formule chimique (5) sont des atomes d'hydrogène.

12. Composition de revêtement antisalissure de l'une quelconque des revendications 1 à 11, dans laquelle le composé ester (B) comprend le composé ester représenté par la formule chimique (3).

13. Composition de revêtement antisalissure de la revendication 12, dans laquelle R¹ de la formule chimique (3) a un cycle aromatique.

14. Composition de revêtement antisalissure de la revendication 12, dans laquelle R¹ de formule chimique (3) est un groupe hydrocarboné aliphatique pouvant comprendre un hétéroatome.

15. Objet revêtu ayant un film de revêtement antisalissure sur une de ses surfaces, le film de revêtement antisalissure étant formé à l'aide de la composition de revêtement antisalissure de l'une quelconque des revendications 1 à 14.
